# EUROPEAN PATENT SPECIFICATION

(11) **EP 2 669 043 B1**
(45) Date of publication and mention of the grant of the patent: **15.02.2017**
(21) Application number: 13169432.5
(22) Date of filing: 28.05.2013
(51) Int. Cl.: B23Q 1/76, B25B 11/00, B64F 5/00, G05D 3/12

(54) **A method and a supporting device for purposes of supporting and aligning a component**
Verfahren und Stütze zum Zwecke des Abstützens und Ausrichtens eines Bauteils
Procédé et support pour supporter et aligner un élément

(30) Priority: 01.06.2012 DE 102012209320; 01.06.2012 US 201261654117 P
(43) Date of publication of application: 04.12.2013
(73) Proprietor: Airbus Operations GmbH, 21129 Hamburg (DE)
(72) Inventor: Kott, Horst, 21149 Hamburg (DE)
(74) Representative: Kopf Westenberger Wachenhausen Patentanwälte PartG mbB

(56) References cited:
- EP-A1- 0 461 064
- EP-A2- 1 728 594
- WO-A1-2006/026948
- DE-A1- 19 847 339
- US-A1- 2009 280 349
- US-A1- 2010 180 432
- US-A1- 2011 002 782

## Description

The invention concerns a method for purposes of supporting and aligning a component supported in a desired orientation in a supporting device at a plurality of support points; it also concerns a supporting device for purposes of supporting and aligning a component in a desired orientation in accordance with the preamble of Claim 1.

The fuselage of an aircraft is conventionally subdivided into a plurality of fuselage sections; these are joined via transverse seams to form the aircraft fuselage. Depending upon the size of the aircraft the cross-sections and lengths of the fuselage sections vary. For purposes of joining the fuselage sections these are usually supported at four support points in a supporting device; of these support points two are located in the front field of the section and two in the rear field of the section, in each case at the side of the fuselage section. The support points can be traversed relative to one another in the longitudinal and transverse directions, so that an alteration of the orientation of the support points relative to one another is possible. The support points are in each case formed from a bearing head unit and a bearing head reception unit. The bearing head unit is, for example, a spherical head, and is releasably attached to the fuselage sections at the side. The bearing head reception unit has, for example, a spherical socket to receive the spherical head, and is arranged via a cross table on a bearing support that can be traversed in the height direction.

Document EP 1 728 594 A2 relates to a support device mounted on equipment designed to secure both curved and flat workpieces of sheet material, typically body pressings or fuselage panels or the like, during the course of machining operations performed on these same workpieces. The support device is capable of vertical movement along a predetermined direction in order to adapt to the geometry of the workpieces. The device may comprise a presence sensor, which may be connected to a monitoring unit.

The document is considered being the closest prior art and discloses the features of the preamble of independent claim 1.

The object of the invention is to create a method for purposes of supporting and aligning a component supported in a desired orientation at a plurality of support points in a supporting device. In addition the object of the invention is to create a supporting device for purposes of supporting and aligning a component supported in a desired orientation at a plurality of support points in a supporting device.

This object is achieved by means of a method with the features of Claim 10, and by means of a supporting device with the features of Claim 1.

In an inventive method for purposes of supporting and aligning a component supported in a desired orientation at a plurality of support points in a supporting device, an elastic deformation of at least one deformation zone of the supporting device is registered, and from a certain deviation from a desired value the at least one deformation zone is traversed relative to at least one support point orthogonally to the support plane of the component.

The inventive method allows an optimal alignment of the support points relative to one another at least orthogonally to the support plane, and thus an optimum mounting of the component in its support plane. In accordance with the invention the loading introduced by the component into the respective support point is individually registered, and if this exceeds a tolerance limit an orientation correction is undertaken. In particular a supporting force of the respective support point is determined from the respective elastic deformation. The supporting force allows a statement to be made concerning the positioning of the component in the supporting device in the support plane. With the aid of the individual supporting forces stresses can be detected in the component. In the case in which the component is mounted horizontally the component can be displaced in its horizontal support plane by a displacement of the support points relative to one another in the height direction of the supporting device, as a result of which supporting forces are individually increased or reduced. As soon as the calculated supporting force or forces are located within a certain deviation from a desired value, the component is located in a stress-free and torsion-free desired orientation, as required for assembly.

An inventive device for purposes of supporting and aligning a component in a desired orientation has at least two bearing supports, at least two bearing head units and at least two bearing head reception units to form at least two support points, whereby either the bearing head units or the bearing head reception units are arranged on the bearing supports. In accordance with the invention the device has at least one deformation zone, which can be elastically deformed in the course of active engagement of one of the bearing head units with one of the bearing head reception units. Moreover the device inventively has a measurement device for purposes of registering and evaluating an elastic deformation of the at least one deformation zone, and also at least one actuator for purposes of traversing the support points relative to one another orthogonally to the support plane of the component.

Such a supporting device allows the execution of the inventive method and thus the positioning of a component in its desired orientation. If, for example, the component is to be aligned in a desired horizontal orientation, the actuators allow traversing of the support points relative to one another in the vertical direction, i.e. in the height direction, of the supporting device.

The at least one deformation zone is preferably a section of the body of the bearing head reception unit. The deformation zone can be a separate section that is introduced into the bearing head unit at a subsequent point in time. However, it is preferable if the deformation zone is integrally designed into the bearing head reception unit in the form of a local reduction in cross-section. As a result of the integral reduction in cross-section the maximum external dimensions of the bearing head reception unit are not altered, so that a bearing head reception unit modified in this manner has, for example, the same height as a conventional bearing head reception unit.

In order to prevent the bearing head reception unit from being subjected to torsion in its deformation zone as a result of loading introduced by the component, which could falsify the measurements registered, the deformation zone is preferably orientated concentrically, i.e. coaxially, with the mounting axis. As a result of the concentricity the deformation zone is symmetrically loaded and is thus deformed free of any torsion.

In a preferred example of embodiment the at least one deformation zone has a radially outboard spring section, which is supported on a deformation-resistant side wall of the bearing head reception unit, and a radially inboard measurement section, which extends from the spring section and between which is clamped a measurement sensor of a measurement device. Such an example of embodiment is robust, can be manufactured easily and adjusted precisely.

The measurement sensor is, for example, a thin film measurement sensor, a thick film measurement sensor, or a piezoelement. Such sensors are very precise and very compact. They have small dimensions, so that the build height of the bearing head reception unit in question is not altered by the integration of the measurement sensor into the latter. In particular the measurement sensor is a thin film measurement sensor or a thick film measurement sensor, since these have high long-term stability and after an initial calibration do not have to be re-calibrated.

Moreover, a thin film measurement sensor typically has a high dynamic loading capacity and is very robust. Furthermore, a thin film measurement sensor or a thick film measurement sensor is in principle more sensitive than a piezoelement, so that even the smallest elastic deformations of the deformation zone can be registered. In the event of an elastic deformation of the deformation zone the measurement sensor experiences in each case an alteration in length, which corresponds to a compressive or tensile loading applied by the component onto the support point. Corresponding to the loading registered the support points can then be traversed relative to one another.

The bearing head unit can have a cylindrical section for purposes of accommodating a bearing head reception element, which extends in the direction of the mounting axis of the measurement section and is encompassed by the spring section. By this means the cylindrical section runs coaxially with the mounting axis and enables a symmetrical introduction of loading into the bearing head reception unit.

For purposes of avoiding alterations in orientation of the bearing head reception element relative to the cylindrical section in the transverse direction and in the longitudinal direction, the said bearing head reception element is preferably secured in the radial direction on the cylindrical section.

In a preferred example of of embodiment the bearing head reception element is a spherical socket and the bearing head unit is a spherical head. Such a spherical joint is very robust and enables a reliable mounting, since it enables a self-centring of the spherical head in the spherical socket. Moreover the loading is transferred over a large area and not at a point.

An actuator and also an elastic deformation zone and a measurement sensor are preferably assigned to each support point. By this means the position of each support point can be altered individually, as a result of which the greatest possible flexibility is achieved with regard to possible corrections in orientation.

Other advantageous examples of embodiment of the invention are the subject of further subsidiary claims.

In what follows preferred examples of embodiment of the invention are elucidated in more detail with the aid of schematic representations. Here:
- Figure 1: shows a frontal view of a bearing support of an inventive supporting device with an indicated support point,
- Figure 2: shows a side view of a bearing head reception unit shown in Figure 1, which is supported on a cross table,
- Figure 3: shows a representation in perspective of the bearing head reception unit, and
- Figure 4: shows a section along the line A-A through the bearing head reception unit from Fig. 3.

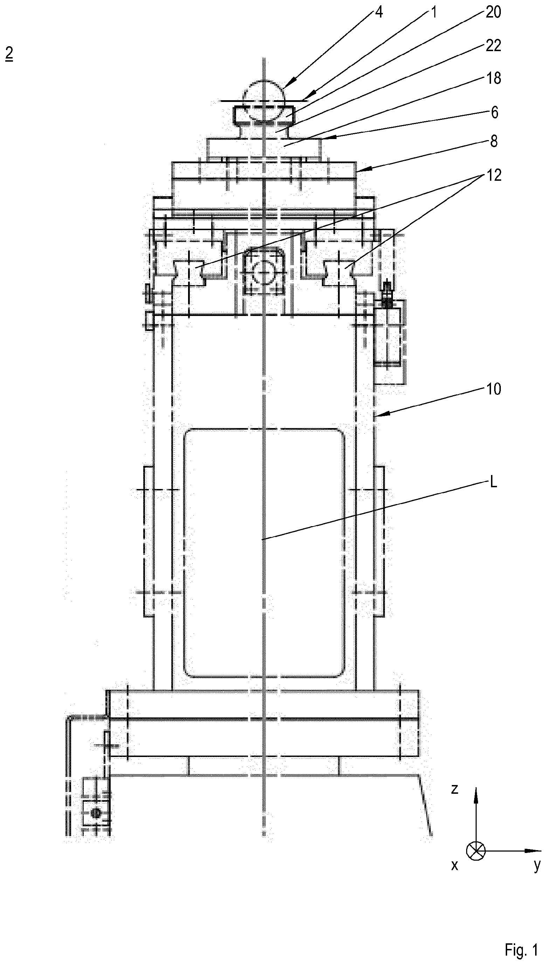

Figure 1 shows a support point 1 of an inventive supporting device 2. The support point 1 defines a mounting axis L that runs in the height direction z and is thus vertical.
The support point 1 can be traversed in the longitudinal direction x of the supporting device 2 and in the transverse direction y of the supporting device 2, The supporting device 2 serves, for example, for the purpose of mounting a fuselage section of an aircraft fuselage in a horizontal support plane, i.e. in a horizontal plane. For this purpose it preferably has four such support points 1, of which as viewed in the longitudinal direction x in each case two support points 1 are arranged in a front region and two in a rear region, in each case located opposite one another in the transverse direction y.

The support points 1 are formed from a bearing head unit 4 and from a bearing head reception unit 6.

The bearing head unit 4 has a spherical head, which is arranged via an arm, not shown, on a retaining plate that can be attached to the fuselage section.

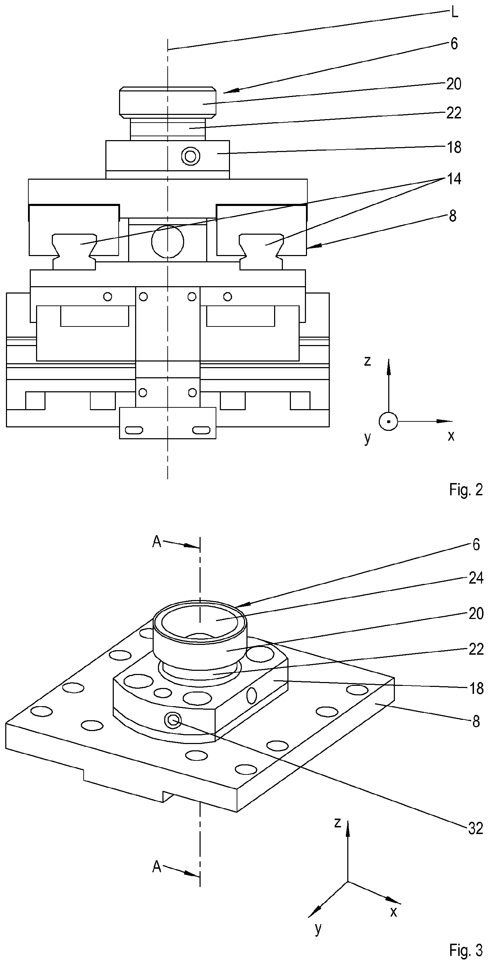

The bearing head reception unit 6 serves to accommodate the spherical head. The bearing head reception unit 6 is arranged on a cross table 8, the head of which is attached to a bearing support 10. The cross table 8 allows a displacement of the support point 1 in the longitudinal direction x and the transverse direction y. For this purpose it has in each case two dovetail-type pairs of rail guides 12, 14, of which the one pair 12 extends in the longitudinal direction x and the other pair 14 in the transverse direction y (Figure 2). For purposes of traversing the support point 1 in the height direction z the bearing support 10 has an actuator, not shown.

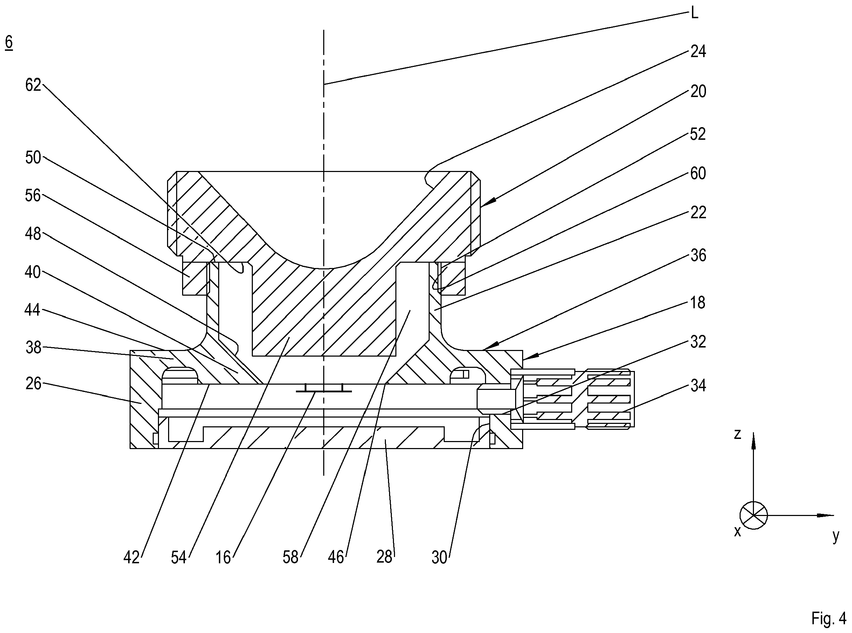

Moreover the supporting device 2 has a measurement device for purposes of registering and evaluating a necessary supporting force applied by each support point 1. A measurement device has a measurement sensor 16 shown in Figure 4, which is explained in more detail in what follows.

Furthermore the supporting device 2 has a control device for purposes of automatic activation of at least the one actuator on the basis of the evaluated supporting force. The measurement device and the control device are preferably combined into one measurement and control device.

As shown in Figure 3, the bearing head reception unit 6 has a housing body 18 and a bearing head reception element 20.

The housing body 18 serves for the attachment of the bearing head unit 4 to the cross table 8 and the support of the bearing head reception element 20. It is a cuboid-shaped hollow body with a cylindrical wall 22 extending in the height direction z. The bearing head reception element 20 has a spherical socket 24 for purposes of accommodating the spherical head and is supported on the cylindrical wall 22.

As shown in the sectional view A-A in Figure 4, in addition to the cylindrical wall 22 the housing body 18 has a side wall 26 and also a base wall 28. The side wall 26 is deformation-resistant, i.e. it is not subjected to any elastic deformation when loaded with the component. The base wall 28 is in the form of a disc and is inserted into an opening 30 in the base bounded by the side wall 26. The base wall 28 closes off the opening 30 and is preferably fixed in position via a spring ring, not shown, on the side wall 26. For purposes of connecting the measurement sensor 16 arranged in the housing body 18 with at least one signal line a port 32 is introduced into the side wall 26 for purposes of inserting a signal plug element 34.

Moreover the housing body 18 has a deformation zone 36. The deformation zone 36 extends approximately between the side wall 26 and the cylindrical wall 22. It is an integral housing wall and has a spring section 38 and also a measurement section 40. Under load the spring section 38 is subjected to an elastic deformation. It extends from the side wall 26 to the mounting axis L and encompasses the latter concentrically, i.e. coaxially. For purposes of enabling the elastic deformation, i.e. a spring action, the spring section 38 is reduced in cross-section in comparison to the side wall 26. In particular an annular taper in cross-section concentric with the mounting axis L is introduced into an inner surface 42 of the spring section 38 facing towards the base wall 28. An outer surface 44 opposite the inner surface 42 is of planar design, but can also be provided with tapers in cross-section for purposes of adjusting the spring action.

The measurement section 40 serves to position the measurement sensor 16, i.e. to transfer the elastic deformation of the spring section 28 onto the measurement sensor 16. It extends from the spring section 38 to the longitudinal axis L and encompasses the latter concentrically. Thus it is designed as a radially inboard collar of the spring section 38. It has an inner peripheral body edge 46, which is formed by the inner surface 42 and a peripheral inclined surface 48 extending radially outwards.

The cylindrical wall 22 of the housing body 18 is arranged in the region of transition from the spring section 38 to the measurement section 40 and runs coaxially with the longitudinal axis L. It is relatively thin-walled and has an annular support face 50 facing away from the base wall 28. Moreover the cylindrical wall 22 has an external thread 52 for purposes of securing the bearing head reception element 20 to the housing body 18.

The bearing head reception element 20 has a spherical socket 24, an axial stiffening projection 54 and an axial securing projection 56. The stiffening projection 54 serves to stiffen the bearing head reception element 20 under load and thus to stabilise the shape of the spherical socket 24. It is arranged on the rear face of the spherical socket 54 and in the assembled state extends coaxially with the longitudinal axis L.

The securing projection 56 serves to secure the bearing head reception element 20 to the housing body 18. It is arranged radially outboard of the stiffening projection 54 on the rear face of the spherical socket 24 and encompasses the latter. It is spaced apart from the stiffening projection 54 in the radial direction by an annular space 58. Compared with the stiffening projection 54 it is shorter axially and has a corresponding internal thread 60 for a releasable active engagement in a form fit with the external thread 52 of the cylindrical wall 22 over the whole of its axial length.

The annular space 58 is open on one side and is bounded via a seating face 62 at the rear of the spherical socket 54. In the assembled state shown the cylindrical wall 22 is immersed in the annular space 58, whereby the bearing head reception element 20 is supported via its seating face 62 on the annular support face 50 of the cylindrical wall 22. The threads 52, 60 are located in mutual active engagement.

The measurement sensor 16 is clamped centrally between the body edge 46 and registers an elastic deformation of the spring section 38. It is a strain gauge, which registers and amplifies the elastic deformations, i.e. the compressive and tensile stresses acting on the spring section 38, under load. For this purpose the measurement sensor 16 has an electrical resistance that alters in the event of strain. It is preferably a thick film sensor or a thin film sensor. The elastic deformation of the spring section 38 is converted via the measurement sensor 16 into an electrical voltage alteration. The electrical voltage alteration is then converted into a supporting force currently applied to the bearing head reception unit 6 and thus to the bearing support 10.

In what follows an exemplary method is explained for purposes of mounting a fuselage section in a horizontal support plane in an inventive supporting device 2. The supporting device 2 has four support points 1 and thus four bearing supports 10, to which in each case a bearing head reception unit 6 and a bearing head unit 4 are assigned. Each bearing head reception unit 6 has a spring section 38 with a measurement sensor 16, whose elastic deformations under load are accommodated by the fuselage section by means of the measurement sensor 16.

For purposes of horizontal mounting of the fuselage section the bearing head units 4 are attached to the fuselage section in the front and rear lateral regions. For this purpose the fuselage section is provided with corresponding lateral seatings. Then the mounting reception units 6 are aligned in a manner corresponding to the positioning of the bearing head units 4 on the fuselage section relative to one another in the longitudinal direction x and the transverse direction y. After that the fuselage section is laid down via the bearing head units 4 in the mounting reception units 6. The respective elastic deformation of the four spring sections 38 is registered and evaluated via the measurement sensors 16 of the measurement and control device. If the supporting force calculated in each case per support point 1 from the elastic deformation deviates from a desired value an orientation correction is made. Here "deviation" can signify both a supporting force that is too small and also a supporting force that is too large. For this purpose at least one of the actuators is activated via the measurement and control device and the positions of the support points 1 in the height direction z relative to one another are altered until a desired supporting force is applied by each bearing head reception unit 1. The fuselage section is now located in its desired horizontal orientation and is free of undesirable mounting stresses. In other words by means of the traversing of the support points 1 relative to one another orthogonally to the support plane, that is to say, in the example of embodiment shown, by means of a relative traversing of the support points 1 in the height direction z, i.e. in the direction of the mounting axes L relative to one another, the respective supporting force of the support points 1 is altered. After achievement of a desired elastic deformation, i.e. a desired measured value, the relative movement in the height direction z is complete. The fuselage section is now located in an optimally-aligned desired orientation.

Needless to say the supporting device can also be used for vertical or inclined mounting and alignment of a component.

Disclosed is a method for the mounting and alignment of a component supported in a supporting device at a plurality of support points in a desired orientation, wherein an elastic deformation of at least one deformation zone of the supporting device is registered, and from a certain deviation from a desired value of the at least one deformation zone is traversed orthogonally relative to at least one support point; also disclosed is a supporting device for purposes of executing such a method, which has at least one elastically deformable deformation zone, a measurement device for purposes of registering and evaluating the at least one elastic deformation, and at least one actuator for purposes of traversing the support points orthogonally relative to one another.

### List of reference symbols

- 1: Support point
- 2: Supporting device
- 4: Bearing head unit
- 6: Bearing head reception unit
- 8: Cross table
- 10: Bearing support
- 12: Guide rail pair
- 14: Guide rail pair
- 16: Measurement sensor
- 18: Base body
- 20: Bearing head reception element
- 22: Cylindrical wall
- 24: Spherical socket
- 26: Side wall
- 28: Base wall
- 30: Opening
- 32: Port
- 34: Plug element
- 36: Deformation zone
- 38: Spring section
- 40: Measurement section
- 42: Inner surface
- 44: Outer surface
- 46: Body edge
- 48: Inclined surface
- 50: Annular support face
- 52: External thread
- 54: Stiffening projection
- 56: Securing projection
- 58: Annular space
- 60: Internal thread
- 62: Seating face

- L: Mounting axis
- x: Longitudinal direction
- y: Transverse direction
- Z: Height direction

## Claims

1. A supporting device (2) for the mounting and alignment of a component in a desired orientation, which has at least two bearing supports (10), at least two bearing head units (4), and at least two bearing head reception units (6) for purposes of forming at least two support points, wherein either the bearing head units (4) or the bearing head reception units (6) are arranged on the bearing supports (10), **characterised in that**, the supporting device (2) has at least one deformation zone (36), which can be elastically deformed in the course of active engagement of the bearing head unit (4) with the bearing head reception unit (6), and **in that** the supporting device (2) has at least one measurement device for purposes of registering and evaluating an elastic deformation of the at least one deformation zone (36) and for evaluating a necessary supporting force applied by each support point, at least one actuator for purposes of traversing the support points (1) relative to one another orthogonally to the support plane of the component, and a control device for purposes of automatic activation of at least the one actuator on the basis of the evaluated supporting force.

2. The supporting device in accordance with Claim 1, wherein the deformation zone (36) is a body region of the bearing head reception unit (6).

3. The supporting device in accordance with Claim 1 or 2, wherein the at least one deformation zone (36) is orientated concentrically with the mounting axis (L).

4. The supporting device in accordance with Claim 1, 2, or 3, wherein the at least one deformation zone (36) has a radially outboard spring section (38), which is supported on a deformation-resistant side wall (26) of the bearing head reception unit (6), and a radially inboard measurement section (40), which extends from the spring section (38) and between which is clamped a measurement sensor (16) of the measurement device.

5. The supporting device in accordance with Claim 4, wherein the measurement sensor (16) is a thin film measurement sensor, a thick film measurement sensor, or a piezoelement.

6. The supporting device in accordance with Claim 4 or 5, wherein the bearing head reception unit (6) has a cylindrical wall (22) for purposes of accommodating a bearing head reception element (20), which extends in the direction of the mounting axis (L) of the measurement section (40) and is encompassed by the spring section (38).

7. The supporting device in accordance with Claim 6, wherein the bearing head reception element (20) in the radial direction is secured on the cylindrical wall (22).

8. The supporting device in accordance with Claim 7, wherein the bearing head reception element (20) has a spherical socket (54) and the bearing head unit (4) has a spherical head.

9. The supporting device in accordance with one of the Claims 4 to 8, wherein an actuator, an elastic deformation zone (36) and a measurement sensor (16) are assigned to each support point (1).

10. A method for purposes of supporting and aligning a component supported in a desired orientation at a plurality of support points (1) in a supporting device (2) according to any of the claim 1 to 9, an elastic deformation of at least one deformation zone (36) of the supporting device (2) is registered, and from a certain deviation from a desired value the at least one deformation zone (36) is traversed relative to at least one support point orthogonally to the support plane of the component.

## Patentansprüche

1. Eine Lagervorrichtung (2) zum Lagern und Ausrichten eines Bauteils in einer Solllage, die zumindest zwei Lagerstützen (10), zumindest zwei Lagerkopfeinrichtungen (4) und zumindest zwei Lagerkopfaufnahmeeinrichtungen (6) zur Bildung von zumindest zwei Lagerstellen (1) aufweist, wobei entweder die Lagerkopfeinrichtungen (4) oder die Lagerkopfaufnahmeeinrichtungen (6) an den Lagerstützen (10) angeordnet sind, **dadurch gekennzeichnet, dass** die Lagervorrichtung (2) zumindest einen Verformungsbereich (36) hat, der beim Wirkeingriff der Lagerkopfeinrichtung (4) mit der Lagerkopfaufnahmeeinrichtung (6) elastisch verformbar ist, und dass die Lagervorrichtung (2) zumindest eine Messeinrichtung zum Erfassen und Auswerten einer elastischen Verformung des zumindest einen Verformungsbereichs (36) und zum Auswerten einer von jeder Lagerstelle aufgebrachten notwendigen Stützkraft, zumindest einen Stellantrieb zum relativen Verfahren der Lagerstellen (1) orthogonal zur Lagerebene des Bauteils zueinander, und eine Regeleinrichtung zum automatischen Ansteuern zumindest des einen Stellantriebs auf Basis der ausgewerteten Stützkraft aufweist.

2. Die Lagervorrichtung nach Anspruch 1, wobei der Verformungsbereich (36) ein Köperbereich der Lagerkopfaufnahmeeinrichtung (6) ist.

3. Die Lagervorrichtung nach Anspruch 1 oder 2, wobei der zumindest eine Verformungsbereich (36) konzentrisch zur Lagerachse (L) orientiert ist.

4. Die Lagervorrichtung nach Anspruch 1, 2 oder 3, wobei der zumindest eine Verformungsbereich (36) einen radial äußeren Federabschnitt (38) hat, der an einer verformungsfreien Seitenwandung (26) der Lagerkopfaufnahmeeinrichtung (6) abgestützt ist, und einen radial inneren Messabschnitt (40) hat, der sich von dem Federabschnitt (38) erstreckt und zwischen dem ein Messsensor (16) der Messeinrichtung eingespannt ist.

5. Die Lagervorrichtung nach Anspruch 4, wobei der Messsensor (16) ein Dünnfilmschichtsensor, ein Dickfilmschichtsensor oder ein Piezoelement ist.

6. Die Lagervorrichtung nach Anspruch 4 oder 5, wobei die Lagerkopfaufnahmeeinrichtung (6) eine Zylinderwandung (22) zur Aufnahme eines Lagerkopfaufnahmeelementes (20) hat, die sich in Richtung der Lagerachse (L) von dem Messabschnitt (40) erstreckt und von dem Federabschnitt (38) umgriffen ist.

7. Die Lagervorrichtung nach Anspruch 6, wobei das Lagerkopfaufnahmeelement (20) in radialer Richtung an der Zylinderwandung (22) gesichert ist.

8. Die Lagervorrichtung nach Anspruch 7, wobei das Lagerkopfaufnahmeelement (20) eine Kugelpfanne (54) und die Lagerkopfeinrichtungen (4) einen Kugelkopf hat.

9. Die Lagervorrichtung nach einem Ansprüche 4 bis 8, wobei jeder Lagerstelle (1) ein Stellantrieb, ein elastischer Verformungsbereich (36) und ein Messsensor (16) zugeordnet sind.

10. Ein Verfahren zum Lagern und Ausrichten eines an mehreren Lagerstellen (1) gelagerten Bauteils in einer Solllage in einer Lagervorrichtung (2) nach einem der vorhergehenden Ansprüche 1 bis 9, wobei eine elastische Verformung zumindest eines Verformungsbereichs (36) der Lagervorrichtung (2) erfasst wird, und der zumindest eine Verformungsbereich (36) ab einer bestimmten Abweichung von einem Sollwert relativ zu zumindest einer Lagerstelle (1) orthogonal zur Lagerebene des Bauteils verfahren wird.

## Revendications

1. Dispositif de support (2) pour le montage et l'alignement d'un composant dans une orientation souhaitée, qui présente au moins deux supports de palier (10), au moins deux unités de tête de palier (4), et au moins deux unités de réception de tête de palier (6) pour former au moins deux points de support, dans lequel les unités de tête de palier (4) ou les unités de réception de tête de palier (6) sont agencées sur les supports de palier (10), **caractérisé en ce que** le dispositif de support (2) comporte au moins une zone de déformation (36), qui peut être déformée élastiquement au moment de la mise en prise active de l'unité de tête de palier (4) avec l'unité de réception de tête de palier (6), et **en ce que** le dispositif de support (2) présente au moins un dispositif de mesure destiné à enregistrer et à évaluer une déformation élastique de ladite au moins une zone de déformation (36) et à évaluer une force de support nécessaire appliquée par chaque point de support, au moins un actionneur pour déplacer les points de support (1) les uns par rapport aux autres orthogonalement au plan de support du composant, et un dispositif de commande pour l'activation automatique d'au moins un actionneur sur la base de la force de support évaluée.

2. Dispositif de support selon la revendication 1, dans lequel la zone de déformation (36) est une région de corps de l'unité de réception de tête de palier (6).

3. Dispositif de support selon la revendication 1 ou 2, dans lequel ladite au moins une zone de déformation (36) est orientée concentriquement à l'axe de montage (L).

4. Dispositif de support selon la revendication 1, 2 ou 3, dans lequel ladite au moins une zone de déformation (36) présente une section de ressort radialement extérieure (38) qui est supportée sur une paroi latérale résistante à la déformation (26) de l'unité de réception de tête de palier (6), et une section de mesure radialement intérieure (40), qui s'étend depuis la section de ressort (38) et entre lesquelles est encastré un capteur de mesure (16) du dispositif de mesure.

5. Dispositif de support selon la revendication 4, dans lequel le capteur de mesure (16) est un capteur de mesure à film mince, un capteur de mesure à film épais, ou un élément piézoélectrique.

6. Dispositif de support selon la revendication 4 ou 5, dans lequel l'unité de réception de tête de palier (6) présente une paroi cylindrique (22) destinée à recevoir un élément de réception de tête de palier (20), qui s'étend dans la direction de l'axe de montage (L) de la section de mesure (40) et est entourée par la section de ressort (38).

7. Dispositif de support selon la revendication 6, dans lequel l'élément de réception de tête de palier (20) dans la direction radiale est fixé sur la paroi cylindrique (22) .

8. Dispositif de support selon la revendication 7, dans lequel l'élément de réception de tête de palier (20) comporte une douille sphérique (54) et l'unité de tête de palier (4) comporte une tête sphérique.

9. Dispositif de support selon l'une quelconque des revendications 4 à 8, dans lequel un actionneur, une zone de déformation élastique (36) et un capteur de mesure (16) sont associés à chaque point de support (1).

10. Procédé pour supporter et aligner un composant supporté dans une orientation souhaitée au niveau d'une pluralité de points de support (1) dans un dispositif de support (2) selon l'une quelconque des revendications 1 à 9, une déformation élastique d'au moins une zone de déformation (36) du dispositif de support (2) est enregistrée, et à partir d'un certain écart par rapport à une valeur souhaitée, ladite au moins une zone de déformation (36) est déplacée par rapport à au moins un point de support orthogonalement au plan de support du composant.
